# EUROPEAN PATENT APPLICATION

(11) **EP 2 501 101 A1**
(43) Date of publication of application: **19.09.2012**
(21) Application number: 12159780.1
(22) Date of filing: 16.03.2012
(51) Int. Cl.: H04L 29/06

(54) **SOC-Based Device for Packet Filtering and Packet Filtering Method thereof**

(30) Priority: 16.03.2011 US 201161453290 P
(71) Applicant: Samsung SDS Co. Ltd., Seoul 135-082 (KR)
(72) Inventor: Yoo, InSeon, Kyeonggi-do (KR)
(74) Representative: Grünecker, Kinkeldey, Stockmair & Schwanhäusser

(57) **Abstract**

Provided is a device including a chip that includes a first storage unit that stores a rule DB for packet filtering, and a firewall engine that allows or blocks transmission of a packet by applying the rule DB; and a rule converter that receives a rule for packet filtering from a user and converts the rule into a format to store the rule in a rule list, wherein the chip receives a rule list converted by the rule converter and stores the rule list in the first storage unit as a rule DB.

## Description

### CROSS-REFERENCE TO RELATED PATENT APPLICATION

This application claims priorities from U.S. Provisional Patent Application No. 61/453,290 filed on March 16, 2011 in the United States Patent and Trademark Office, the disclosure of which is incorporated herein by reference in its entirety.

### BACKGROUND

### 1. Field

Apparatuses and methods consistent with the exemplary embodiments relate a system-on-chip (SOC)-based device which can provide packet filtering and a packet filtering method thereof, and more particularly, to a SOC-based device which can provide packet filtering by setting a firewall to allow or block packets according to a process of a network application, and a packet filtering method thereof.

### 2. Description of the Related Art

As the internet is being widely used, malicious malware of various forms such as worm, Trojan horses, viruses, or DDoS appears and damage by the malware is increasing. Therefore, there is a demand for a method for responding to network attacks and a relevant device to protect information over a network.

In particular, mobile devices have limited available resources and thus require high speed filtering technology to filter packets at a high speed, while using resources at the minimum.

### SUMMARY

One or more aspects of the exemplary embodiments provide a method and a device which convert a rule input by a user through a user interface using a rule converter and store the rule in a format of a rule list.

One or more aspects of the exemplary embodiments provide a device which sets a firewall to allow or block packets according to a process of a network application, thereby allowing or blocking all of the packets generated by a corresponding process, and a packet filtering method thereof.

One or more aspects of the exemplary embodiments provide a device which can more easily perform a firewall setting job with respect to a service desired by a user by providing a configuration helper when setting a rule for packet filtering, and a packet filtering method thereof.

According to an aspect of an exemplary embodiment, there is provided a device including: a chip that includes a first storage unit that stores a rule DB for packet filtering, and a firewall engine that allows or blocks transmission of a packet by applying the rule DB, and a rule converter that receives a rule for packet filtering from a user and converts the rule into a format to store the rule in a rule list, wherein the chip receives a rule list converted by the rule converter and stores the rule list in the first storage unit as a rule DB.

According to an aspect of another exemplary embodiment, there is provided a packet filtering method of a device that mounts a chip having a firewall function thereon, the packet filtering method including: receiving, by the device, a rule for packet filtering from a user and converting the rule into a format of a rule list, receiving, by the chip, a rule list from the device and storing the rule list in a format of a rule DB, and allowing or blocking, by the chip, transmission/reception of a packet using the rule DB.

Additional aspects and advantages of the exemplary embodiments will be set forth in the detailed description, will be obvious from the detailed description, or may be learned by practicing the exemplary embodiments.

### BRIEF DESCRIPTION OF THE DRAWINGS

The above and other features and advantages will become more apparent by describing in detail exemplary embodiments with reference to the attached drawings in which:

FIG. 1 is a view to explain a device on which a SOC is mounted according to an exemplary embodiment;

FIG. 2 is a view to explain a device on which a SOC is mounted according to an exemplary embodiment;

FIG. 3 is a view to explain a rule setting screen provided by a firewall interface according to an exemplary embodiment;

FIG. 4 is a view to explain a function of a configuration helper according to an exemplary embodiment;

FIG. 5 is a view to explain a rule setting screen to set a basic rule according to an exemplary embodiment;

FIG. 6 is a view to explain a rule setting screen to set a rule according to a process according to an exemplary embodiment;

FIG. 7 is a flowchart illustrating an operation of a rule converter according to an exemplary embodiment;

FIG. 8 is a view to explain a method for storing a converted rule according to an exemplary embodiment; and

FIG. 9 is a flowchart to explain a packet filtering method of the device of FIG. 2 according to an exemplary embodiment.

### DETAILED DESCRIPTION OF EXEMPLARY EMBODIMENTS

Exemplary embodiments will now be described more fully with reference to the accompanying drawings to clarify aspects, features and advantages of the inventive concept. The exemplary embodiments may, however, be embodied in many different forms and should not be construed as limited to the exemplary embodiments set forth herein. Rather, the exemplary embodiments are provided so that this disclosure will be thorough and complete, and will fully convey the scope of the application to those of ordinary skill in the art. It will be understood that when an element, layer or region is referred to as being "on" another element, layer or region, the element, layer or region can be directly on another element, layer or region or intervening elements, layers or regions.

The terms used herein are for the purpose of describing particular exemplary embodiments only and are not intended to be limiting. As used herein, the singular forms "a", "an" and "the" are intended to include the plural forms as well, unless the context clearly indicates otherwise. It will be further understood that the terms "comprises" and/or "comprising," when used in this specification, do not preclude the presence or addition of one or more other components.

Hereinafter, exemplary embodiments will be described in greater detail with reference to the accompanying drawings. The matters defined in the description, such as detailed construction and elements, are provided to assist in a comprehensive understanding of the exemplary embodiments. However, it is apparent that the exemplary embodiments can be carried out by those of ordinary skill in the art without those specifically defined matters. In the description of the exemplary embodiment, certain detailed explanations of related art are omitted when it is deemed that they may unnecessarily obscure the essence of the inventive concept.

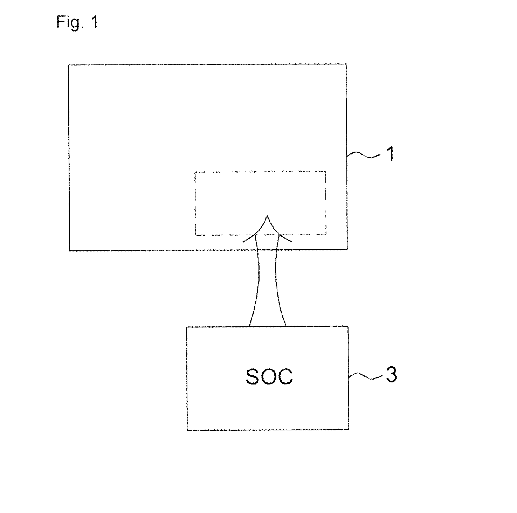

FIG. 1 is a view to explain a device on which a SOC is mounted according to an exemplary embodiment.

Referring to FIG. 1, a device 1 according to an exemplary embodiment includes a SOC 3 mounted thereon and having a firewall function to filter packets.

The device 1 may include a user interface (UI) application for a firewall operation, and the UI application may provide a state of a rule for packet filtering to a user and may receive a new rule from the user.

The device 1 may further include a rule converter and a rule list storage device. The rule converter converts a rule received from a user through a UI into a format that can be stored in the device 1, and adds the rule to an existing rule list. The rule list may be stored in an internal storage device or an external storage device of the device 1.

The rule list stored in the rule list storage device is transmitted to the SOC 3. The SOC 3 loads the rule list into its own memory or stores the rule list in a storage device as a rule database (DB), and a firewall engine performs a filtering operation with respect to a packet by referring to the rule DB.

The device 1 may include at least one network application that uses a packet transmitted/received through a network, and each application may include at least one process. For convenience of explanation, a process that uses a certain packet by transmitting the packet to an external device or receiving the packet from the external device is referred to as an "owner process" of the packet. According to an exemplary embodiment, each of the processes is assigned an identification (ID) so that the processes can be distinguished from one another. Each packet includes a process ID of an owner process using the packet. Accordingly, the owner process using the packet may be identified by the process ID included in the packet.

According to an exemplary embodiment, the SOC 3 may include a network interface card (NIC) and accordingly the device 1 may transmit the packet to the external device through the SOC 3 and may receive the packet from the external device through the SOC 3.

If the SOC 3 includes the NIC and the device 1 transmits/receives the packet with the external device through the NIC, the device 1 identifies the owner process of the packet to be transmitted/received and transmits the process ID of the owner process to the SOC 3 along with the packet.

According to an exemplary embodiment, the firewall engine of the SOC 3 determines whether the owner process of the packet to be transmitted/received is allowed to transmit/receive the packet or not by referring to the rule DB, and allows the packet to pass only if it is determined that the owner process is allowed to transmit/receive the packet.

Additionally, if the owner process of the packet to be transmitted to the external device is not allowed to transmit the packet to the external device, the device 1 may stop executing the owner process of the packet.

Although not shown in FIG. 1, the SOC 3 may include hardware and/or software resources including a central processing unit (CPU), a memory, a memory controller, and a rule DB storage unit. Although the resources necessary for driving programs such as a CPU, a memory, a memory controller, and a rule DB storage unit are not explicitly explained in this specification, it should be understood that the hardware and software resources necessary for driving the programs and operations thereof are included.

For example, the firewall engine included in the SOC 3 may include a matcher to match the rule DB and the packet and a firmware to operate the matcher. However, although the matcher and the firmware are not explicitly mentioned, it should be understood that a storage unit to store the firmware and a CPU to load the firmware into a memory are included in the SOC 3.

Similarly, if the device 1 is described as including a certain application or driver, it should be understood that hardware and/or software resources to operate the application or driver are included.

The device 1 may be a mobile device such as a smart phone or a personal digital assistant (PDA). However, this is merely an example and the device 1 may be a fixed-type device such as a desktop computer.

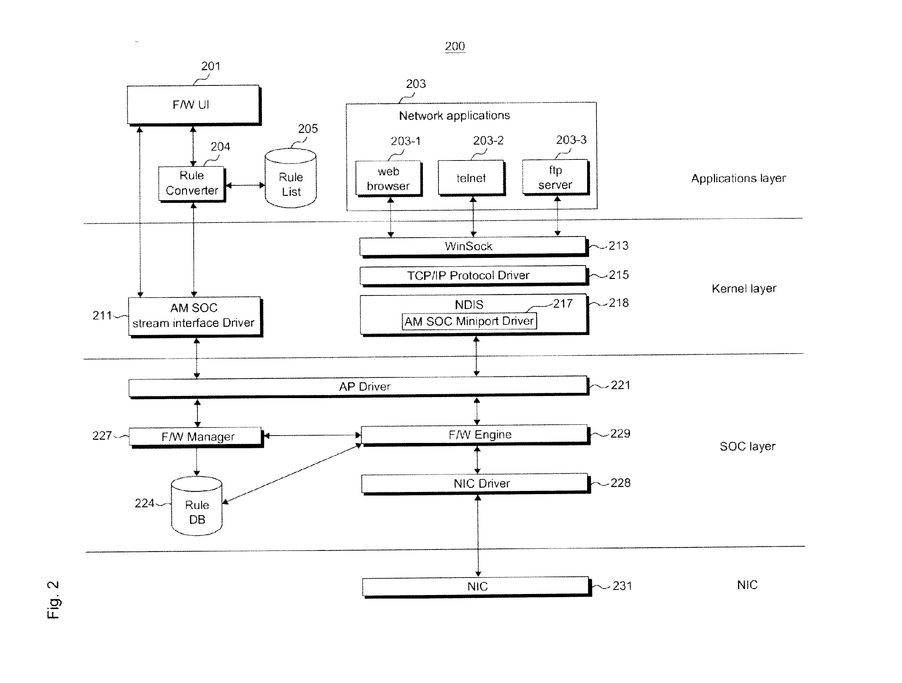

FIG. 2 is a view to explain a device on which a SOC is mounted according to an exemplary embodiment. In FIG. 2, a firewall function is realized based on the SOC and is mounted in the device 200.

As shown in FIG. 2, the device 200 may be divided into an application layer, a kernel layer, a SOC layer, and a NIC layer. Some of these function layers may be omitted or another function layer may be added according to an exemplary embodiment. Also, a detailed element of each function layer may be modified. Therefore, the configuration of FIG. 2 is merely an example and the present disclosure should not be limited to FIG. 2.

Referring to FIG. 2, the device 200 may include a firewall UI application 201 and various network applications 203.

The firewall UI application 201 provides a user interface related to a firewall operation. For example, the firewall UI application 201 may provide a firewall operating job, a firewall stopping job, a rule adding job, a rule changing job, a specific rule removing job, an entire rule removing job, a rule state displaying job, a job of outputting a packet log applied to each rule, and a job of changing a basic rule setting.

The firewall UI application 201 may receive a rule for packet filtering from a user and may display a result of packet filtering by a firewall engine 229 for the user. The firewall UI application 201 may perform adding and/or updating of a rule for packet filtering.

According an exemplary embodiment, the firewall UI application 201 may display a result of packet filtering for each process by a miniport driver 217 for the user, or may update a rule DB by receiving a rule for each process from the user.

A rule converter 204 converts the rule input by the user into a rule format that is used in the device 200, and scans whether a collision occurs among a plurality of rules or not. If a collision occurs among the rules, the rule converter 204 may notify the firewall UI application 201 of a result of the collision and may receive an additional command from the user.

A rule list storage device 205 stores the rule converted by the rule converter 204 in a format of a list and may be one of non-volatile memories.

An anti-malware SOC stream interface driver 211 (hereinafter, referred to as a 'stream interface driver') may receive data from the firewall UI application 201 and transmit the data to an AP driver 221 of the SOC, and may receive data from the AP driver 221 and transmit the data to the firewall UI application 201.

A firewall manager 227 processes a user command input through the firewall UI application 201 and is realized on the SOC. The firewall manager 227 may store the rule in a rule DB 224 according to a user command, and may read out a current state of the rule DB 224 and transmit the current state of the rule DB 224 to the firewall UI application 201, thereby displaying the current state for the user.

The network applications 203 include an application 203 that uses packet data to be packet-filtered. For example, the network application 201 may be at least one of a web browser 203-1, a telnet 203-2, and a file transfer protocol (FTP) server 203-3 or may be one of applications using predetermined packet data.

The kernel layer of the device 200 according to the exemplary embodiment may transmit information within the packet data received by the device 200 from an external device to the application layer, or may generate packet data according to a request from the application layer and transmit the packet data to an external device.

If a transmission control protocol/internet protocol (TCP/IP) is used to transmit/receive packet data as shown in FIG. 2, the device 200 includes a TCP/IP driver 215. Also, if the device 200 uses Windows as an operating system (OS), the device 200 includes a WinSock 213. Since the operations of the TCP/IP driver 215 and the WinSock 213 are well known, a detailed description thereof is omitted.

If the device 200 uses a different protocol other than the TCP/IP, the device 200 may include a driver for using the different protocol, and, if the device 200 uses a different operating system other than the Windows operating system, the device 200 may include an element other than the WinSock 213. That is, the WinSock 213 and the TCP/IP driver 215 may be substituted with other elements according to an exemplary embodiment.

The kernel layer may further include a network driver interface specification (NDIS) 218, and the NDIS 218 may include an anti-malware SOC miniport driver 217 (hereinafter, referred to as a 'miniport driver').

The miniport driver 217 may receive packet data from the network application 203 and transmit the packet data to the AP driver 221, or may receive packet data from the AP driver 221 and transmit the packet data to an upper layer.

According to an exemplary embodiment, the miniport driver 217 may filter the packet data according to a process prior to transmitting the packet data to the AP driver 221. For example, in the case that a rule set according to a process is included among the rules for packet filtering, if the miniport driver 217 receives a packet from the network application 203, the miniport driver 217 identifies an owner process of the packet and compares the owner process with the rule set according to the process, thereby determining whether to pass the packet or not. Alternately, the miniport driver 27 identifies the owner process of the packet and then transmits the packet to the SOC along with information indicating the owner process (for example, a process ID), and the SOC determines whether to pass the packet or not.

The AP driver 221 receives the packet data from the miniport driver 217 and transmits the packet data to the firewall engine 229. The firewall engine 229 performs a packet verification process and performs packet filtering. The packet verification process is to prevent an attack such as Syn Flooding.

The firewall engine 229 applies the rule for packet filtering to the packet and determines whether to allow or block the packet, and allows or blocks the packet according to a result of the determining. At this time, the firewall SOC includes the rule DB 224 and performs packet filtering using the rule stored in the rule DB 224.

If the packet is to be transmitted to the outside of the device 200, the firewall engine 229 transmits only the packet that is determined to be 'allowed' as a result of the packet filtering to an NIC driver 228. The NIC driver 228 transmits the packet received from the firewall engine 229 to an NIC 231. After that, the NIC 213 transmits the packet to an external network.

If the device 200 receives a packet from an external device, the firewall engine 229 transmits only the packet that is determined to be 'allowed' as a result of the packet filtering to the AP driver 221, and the AP driver 221 transmits the packet to the miniport driver 217.

The NIC 231 may transmit the packet data to a packet network or receive the packet data from the packet network, and may be mounted in the SOC as a part. The NIC 231 may receive the packet data through a wired or wireless LAN, for example.

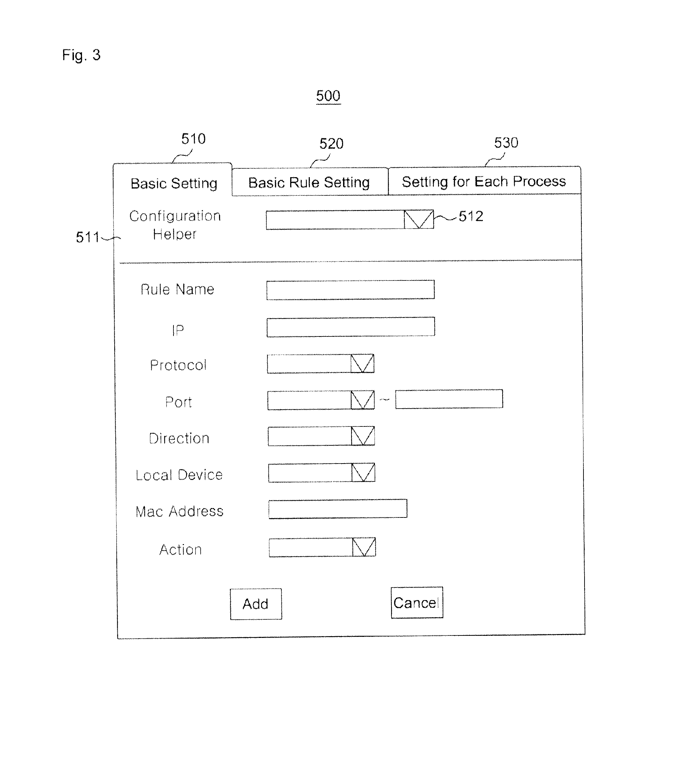

FIG. 3 is a view to explain a rule setting screen provided by a firewall interface according to an exemplary embodiment.

According to an exemplary embodiment, the firewall UI application 201 of the device 200 may transmit a rule input by a user to the rule converter 204, and the format of the rule is converted by the rule converter 204 and the rule is added to a pre-stored rule list and stored in the rule list storage device 205.

Referring to FIG. 3, a rule setting screen 500 includes three subwindows, that is, a basic setting window 510, a basic rule setting window 520, and a setting for each process window 530. The user may select one of the three subwindows on the rule setting screen 500 to set a rule. Among these, FIG. 3 illustrates the basic setting window 510 as selected one.

For example, the basic setting window 510 is displayed if the user wishes to allow or block a site corresponding to a certain specific IP address or an IP address of a specific network band.

In FIG. 3, the basic setting window 510 includes an input box 512 to provide a function of a configuration helper 511 and includes input boxes to fill various fields such as a rule name, an IP, a protocol, and a port under the input box 512.

The configuration helper 511 helps a user who knows nothing of the network. According to an exemplary embodiment, the configuration helper 511 provides a list of network applications, and, if at least one network application is selected from among the network applications included in this list by the user, the configuration helper 511 may automatically display at least one of an IP, a protocol, and a port necessary for executing the selected network application on an input box of the corresponding field.

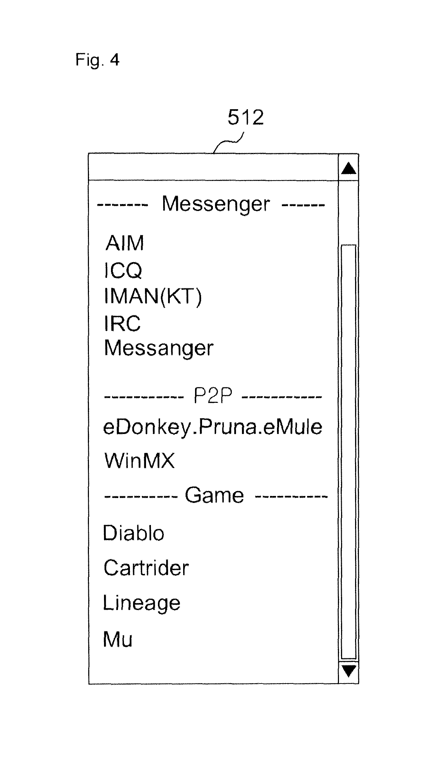

For example, if a button of the input box 512 of the configuration helper 511 is selected by the user, a menu is displayed as shown in FIG. 4. If the user selects one of the displayed network applications, the fields such as the rule name, the IP, the protocol, and the port under the configuration helper 511 in FIG. 3 are automatically filled.

Although the list of FIG. 4 includes a messenger, a P2P, game, a protocol such as ftp, http, telnet, ssh, and printer may be included in the list to be selected according to an exemplary embodiment.

The configuration helper 511 is provided since general users know nothing of a specific protocol or a port of a specific service. Also, even if a user well knows a network, the user may not know that ports 6891~6900 and ports 41800~41899 should be allowed in order to transmit/receive a file through an MSN messenger until the user finds a relevant document. Therefore, by providing the configuration helper 511 for the general users, the user can easily perform a firewall setting job with respect to a service as he/she wishes.

Referring back to FIG. 3, the various fields under the configuration helper 511 has the following meanings:
- Rule Name: Field to input a name of a rule.
- Internet Protocol: Field to set an IP to which a rule is applied.
- Protocol: Field to set a protocol to which a rule is applied. In an exemplary embodiment, if a protocol button is pressed, a menu list such as 'ALL', 'TCP', 'UDP', and 'ICMP' may be displayed. Besides the basic protocols, other protocols may be supported.
- Port: Field to set a port to which a rule is applied. The user may input directly or may select by pressing a menu button. If the menu button is pressed, a protocol character string such as ftp, http, telnet, ssh is displayed. If one of these is selected, a minimum port number and a maximum port number may automatically enter or may be input by the user.
- Direction: Field to designate a direction of a packet to which a rule is applied. In an exemplary embodiment, if a button is pressed, a menu list such as 'ALL', 'In→Out', 'Out→In' may be displayed. 'In→Out' means that a rule is applied to only a packet that is transmitted to an outside of the device 200, 'Out→In' means that a rule is applied to only a packet that is received by the device 200, and 'ALL' means that a rule is applied to all of the packets transmitted and received.
- Local Device: Field to set a network interface IP to which a rule is applied. For example, if the device 200 includes two NICs and a rule is to be applied to a packet input through a specific NIC, an IP of the specific NIC is entered in this field. If a button of this field is pressed, 'ALL' or an IP list of a local device is displayed to be selected.
- MAC Address: Field to set a MAC address to which a rule is applied.
- Action: Field to set what action is to be taken if a packet matched with a rule is input. The action may include 'Nothing', 'Allow', 'Block', and 'Logging'. The 'Logging' is a function of leaving a record of a log regarding a packet to which a rule is applied.

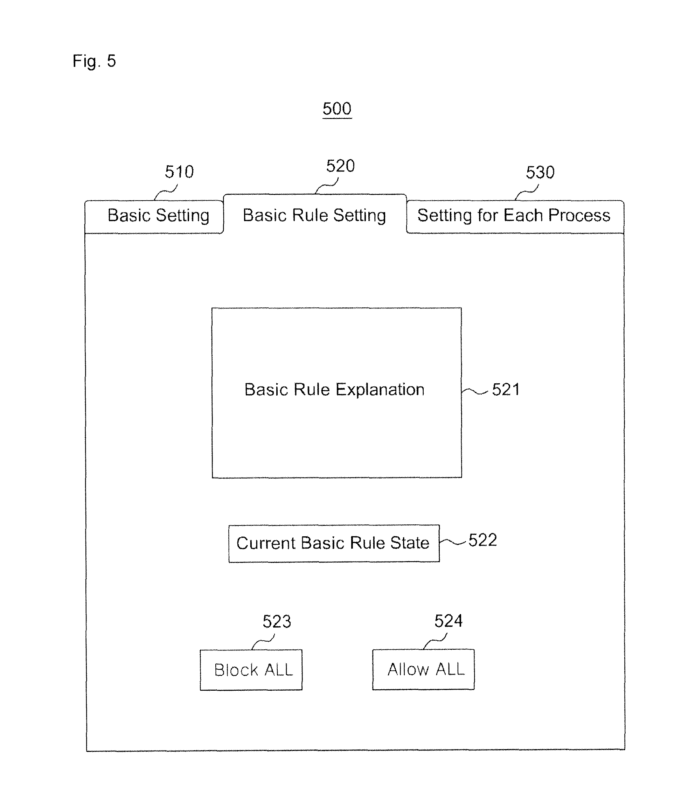

Referring to FIG. 5, a method of setting a basic rule according to an exemplary embodiment will be explained. FIG. 5 is a view to explain the rule setting screen 500 to set a basic rule according to an exemplary embodiment. FIG. 5 illustrates the basic rule setting window 520 as selected one.

The basic rule is a rule to be applied if a packet that does not conform to the rule set by the user as shown in FIG. 3 is input. Referring to FIG. 5, the basic rule setting window 520 may include a box 521 that explains a basic rule and a box 522 that displays a current rule state, and may include an all block button 523 and an all allow button 524.

The box 521 explaining the basic rule is an explanation box to explain a meaning of a basic rule setting to the user, and the box 522 displaying the current basic rule state displays a state of a currently set basic rule.

In an exemplary embodiment, the basic rule, as a basic default value, may be set to allow packets that are transmitted to the outside (outgoing packets) and block packets that are input to the device (incoming packets) The all block button 523 and the all allow button 524 are to set such a basic rule setting as 'blocking' or 'allowing' all of the outgoing and incoming packets, respectively.

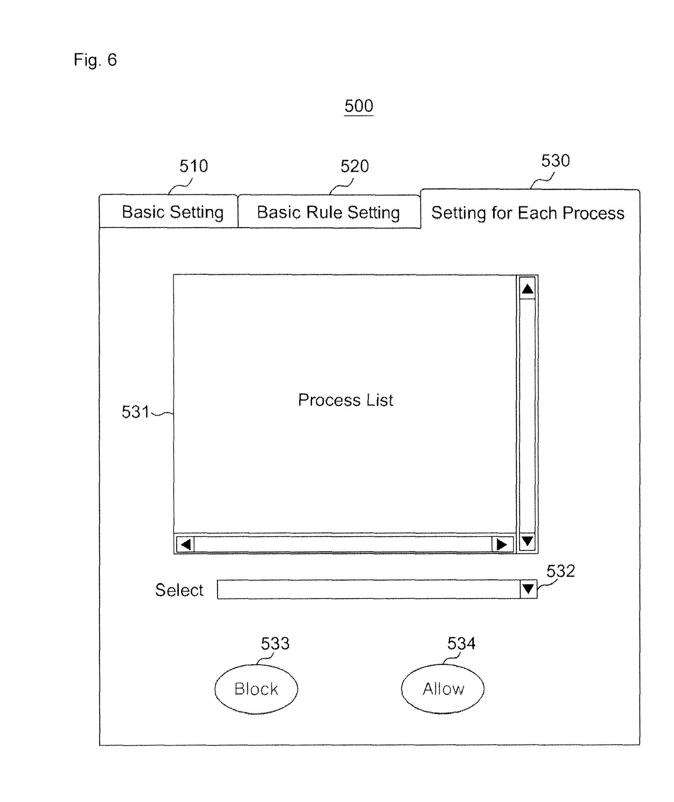

FIG. 6 is a view to explain the rule setting screen to set a rule according to a process according to an exemplary embodiment, in which the setting window 530 is selected.

The setting for each process window 530 is an area to input a rule that defines a packet as being allowed or block according to a process of an application, and may include a process list 531, a selection box 532, a block button 533, and an allow button 534.

The user may set a firewall regarding a process of a certain specific application as 'allow' through the setting window 530, thereby allowing all packets generated by the process to pass, and may set a firewall regarding a process of a certain specific application as 'block', thereby blocking all packets generated by the process.

Although the packets are set to be allowed or blocked or execution of the process itself is stopped in the unit of process of an application (program) in the above exemplar embodiment, the above operation may be performed in the unit of program other than a process. For example, with respect a blocked packet, a program used by the packet may be identified and execution of the program may be stopped.

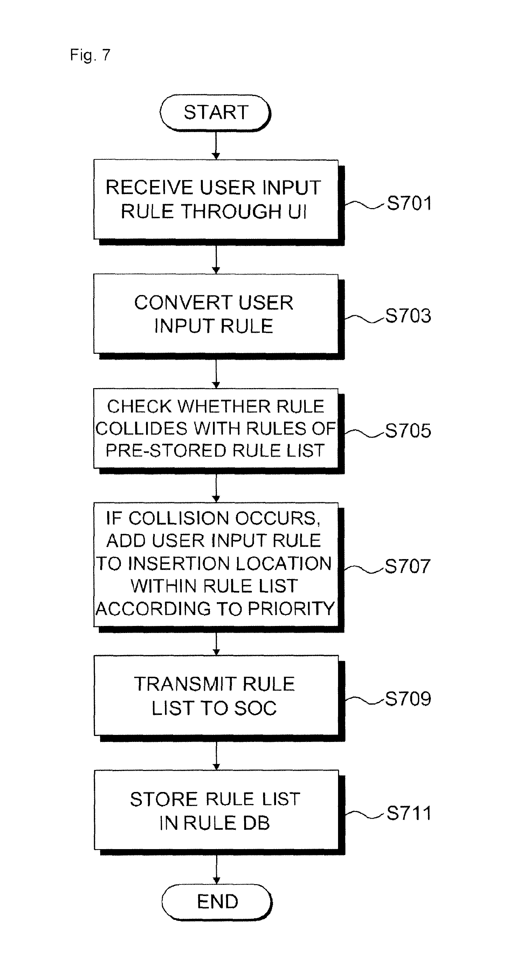

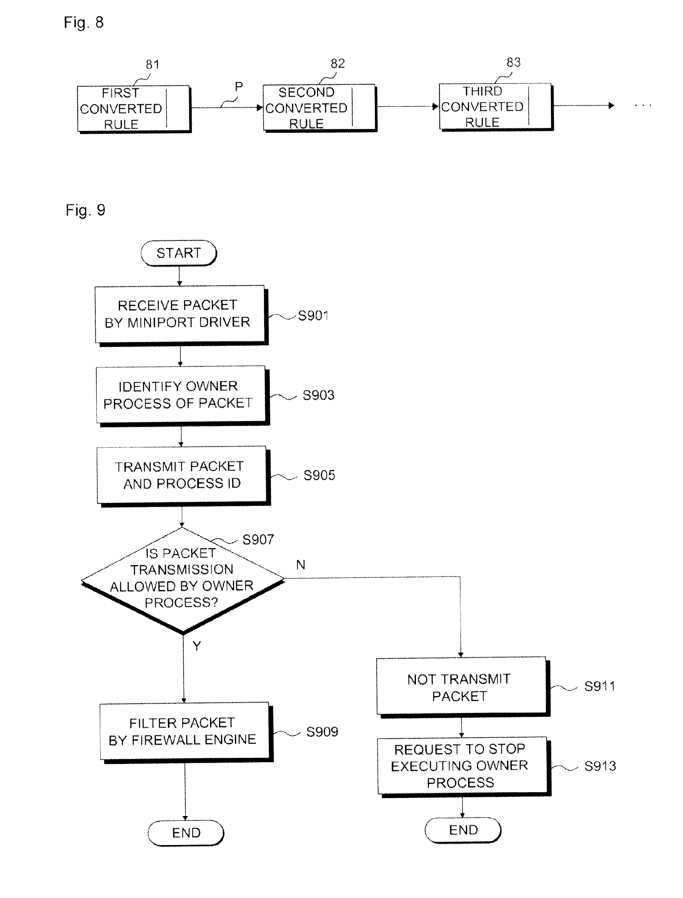

Referring to FIGS. 7 and 8, a rule converting operation will be explained.

FIG. 7 is a flowchart illustrating an operation of a rule converter according to an exemplary embodiment, In operation S701, the firewall UI application 201 receives a rule from a user.

For example, the user may input at least one rule for packet filtering through the setting screen 500 provided by the firewall UI application 201. For example, following table 1 shows a plurality of rules input by the user:

**[Table 1]**

| Name | IP | Pro | Minport | Maxport | Dir | Local Device | Mac | Act |
|---|---|---|---|---|---|---|---|---|
| In 0 | 192 168 0 * | * | * | * | * | 192 168 0 1 | * | Allow |
| In 1 | 192 168 1 4/255 255 255 240 | * | * | * | * | 192 168 1 1 | * | Allow |
| In 2 | 192 168 2 111/27 | * | * | * | * | * | * | Allow |
| NetBIOS | 192 168** | * | 137 | 139 | * | * | * | Allow |
| ftp server | * | TCP | 20 | 21 | * | * | * | Allow |
| web server | * | TCP | 80 | 80 | * | * | * | Allow |
| remote desktop | * | TCP | 3389 | 3389 | IN | 192 168 0 1 | * | Allow |
| nateon | 211 47 69 16 | TCP | 5004 | 5010 | IN | * | * | Allow |
| msn | 207 68 172 246 | * | 1863 | 1863 | * | * | * | Allow |
| msn file | 207 68 172 246 | * | 6891 | 6900 | * | * | * | Allow |
| fortress | 211 117 60 11/24 | TCP | 41800 | 41899 | * | * | | Allow |
| ICMP | * | ICMP | * | * | IN | * | * | Block |

In table 1, the mark "*" represents 'ALL'.

After that, if the rule input by the user is transmitted to the rule converter 204, the rule converter 204 converts the rule in operation S703. In operation S703, the rule input by the user may be converted into a rule format acceptable to the device 200, for example, into a rule format that can be stored in the rule list storage device 205.

The rule may be converted according to a predetermined conversion regulation. For example, among the fields of the rule, 'protocol', 'packet direction', and 'action' may be converted according to the following conversion regulations:

**[Table 2]**

| UI display character string | Macro | Value | Remarks |
|---|---|---|---|
| Protocol | | | |
| ALL | RULE_PROTOCOL_ALL | 0x00 | |
| TCP | RULE_PROTOCOL_TCP | 0x06 | |
| UDP | RULE_PROTOCOL_UDP | 0x11 | |
| ICMP | RULE_PROTOCOL_ICMP | 0x01 | |
| Others | RULE_PROTOCOL_[Protocol Name] | [Protocol Number] | |

| Direction | | | |
|---|---|---|---|
| ALL | RULE_DIRECTION_ALL | 0x00 | |
| Out→In | RULE_DIRECTION_IN | 0x01 | |
| In→Out | RULE_DIRECTION_OUT | 0x02 | |

| Action | | | |
|---|---|---|---|
| Nothing | RULE_ACTION_NOTHING | 0x00 | |
| Allow | RULE_ACTION_ALLOW | 0x01 | |
| Block | RULE_ACTION_BLOCK | 0x02 | |
| Log | RULE_ACTION_LOG | 0x03 | |

If a rule of 'In 2' (a rule on a third row from the top of table 1) is converted according to predetermined conversion regulations including the above conversion regulations for example, the rule may be converted as follows:

**[Table 3]**

| Variable Name | Type | Value |
|---|---|---|
| rule_id | unsigned char | 0x2 |
| name | char* | "In 2" |
| ip | unsigned int[4] | 0XC0A80260 (decimal: 192.168.2.96) |
| netmask | unsigned int[4] | 0XFFFFFFE0(decimal: 255.255.255.224) |
| protocol | unsigned char | 0x0 |
| min_port | unsigned short | 0x0 |
| max_port | unsigned short | 0x0 |
| direction | unsigned char | 0x0 |
| interface-ip | unsigned int[4] | 0x0 |
| mac_addr | unsigned char[6] | 0x0 |
| ip_version | unsigned char | 0x4 (meaning IPv4) |
| action | unsigned char | 0x1 |

Also, if a rule on a fifth row from the bottom of table 1, 'nateon', is converted according to a predetermined conversion regulation, the rule may be converted as follows:

**[Table 4]**

| Variable Name | Type | Value |
|---|---|---|
| rule_id | unsigned char | 0x7 |
| name | char* | "nateon" |
| ip | unsigned int[4] | 0XD32F4510 (decimal: 211.47.69.16) |
| netmask | unsigned int[4] | 0XFFFFFFFF |
| protocol | unsigned char | 0x6 |
| min_port | unsigned short | 0x138C(decimal: 5004) |
| max_port | unsigned short | 0x1392 (decimal: 5010) |
| direction | unsigned char | 0x1 |
| interface-ip | unsigned int[4] | 0x0 |
| mac_addr | unsigned char[6] | 0x0 |
| ip_version | unsigned char | 0x4 (meaning IPv4) |
| action | unsigned char | 0x1 |

The rule converter 204 converts all of the rules input by the user in the above-described method, and accordingly, the rules of table 1 are converted by the rule converter 204 as follows:

**[Table 5]**

| ID | Name | IP | Netmask | Pro. | Minport | Maxport | Dir. | Local Device | Mac | Ver. | Act. |
|---|---|---|---|---|---|---|---|---|---|---|---|
| 0 | In 0 | 192.168.0.0 | 255.255.255.0 | 0 | 0 | 65535 | 0 | 192.168.0.1 | 0 | 4 | 1 |
| 1 | in 1 | 192 168 1 0 | 255 255 255 240 | 0 | 0 | 65535 | 0 | 192 168 1 1 | 0 | 4 | 1 |
| 2 | In 2 | 192 168 2 96 | 255 255 255 224 | 0 | 0 | 65535 | 0 | 0 | 0 | 4 | 1 |
| 3 | NetBIOS | 192 168 0 0 | 255 255 0 0 | 0 | 137 | 139 | 0 | 0 | 0 | 4 | 1 |
| 4 | ftp server | 0 | 0 | 6 | 20 | 21 | 0 | 0 | 0 | 4 | 1 |
| 5 | web server | 0 | 0 | 6 | 80 | 80 | 0 | 0 | 0 | 4 | 1 |
| 6 | remote desktop | 0 | 0 | 6 | 3389 | 3389 | 1 | 192 168 0 1 | 0 | 4 | 1 |
| 7 | nateon | 211 47 69 16 | 255 255 255 255 | 6 | 5004 | 5010 | 1 | 0 | 0 | 4 | 1 |
| 8 | msn | 207 68 172 246 | 255 255 255 255 | 0 | 1863 | 1863 | 0 | 0 | 0 | 4 | 1 |
| 9 | msn file | 207 68 172 246 | 255 255 255 255 | 0 | 6891 | 6900 | 0 | 0 | 0 | 4 | 1 |
| 10 | fortress | 211 117 60 11 | 255 255 255 0 | 6 | 41800 | 41899 | 0 | 0 | 0 | 4 | 1 |
| 11 | ICMP | 0 | 0 | 1 | 0 | 65535 | 1 | 0 | 0 | 4 | 2 |

The converted user input rules are stored in the storage device 205 in a format of a rule list and FIG. 8 explains a method for storing the converted rules according to an exemplary embodiment.

As shown in FIG. 8, the rules after being converted may be stored in a format of a linked list. The linked list adopts a data structure scheme to connect data to one another and manage the data, and each data is stored in a storage unit called a node. If three rules are converted as shown in FIG. 8, for example, first to third converted rules are stored in nodes 81, 82, and 83, respectively.

Each of the nodes 81, 82, and 83 includes a pointer P indicating a location of a next node of each node. In the example of FIG. 8, the rules are stored in the order of the first converted rule, the second converted rule, and the third converted rule according to an indication of each pointer P. Accordingly, the rules are applied to each packet in the same order when the packets are filed afterward.

As described in the above exemplary embodiment, the converted rules are managed in the format of a list data structure rather than in the format of a DB because of management efficiency. If a separate DB is used to manage the rules, a library for the DB is necessary. However, this may cause a problem of compatibility or size. In particular, since the rules are small in number, a size of a DB code is larger than a rule size if the rules are managed in the format of a DB, and thus efficiency is reduced. Also, if a separate DB is used, the DB should also be ported when the rules are ported into a different operating system.

If the user input rule is converted in operation S703, the rule converter 204 checks whether the converted rule collides with existing rules or not prior to adding the converted rule to the existing rule list in operation S705.

The collision is checked in various methods. According to an exemplary embodiment, the rule converter 204 may check whether the converted rule collides with each of the rules included in the existing rule list. That is, the rule may be checked by performing a collision check algorithm which compares a rule newly input by the user and all of the registered rules.

In operation S707, if a collision occurs between the user input rule to be newly added and the pre-stored rules, the rule converter 204 determines a location where the user input rule is inserted according to a predetermined priority and adds the user input rule to this location.

The priority may be set in advance according various criteria according to an exemplary embodiment.. For example, the first input rule among the colliding rules may have a priority and thus may be first applied when the packets are filtered, or the last input rule may have a priority and thus may be first applied when the packets are filtered.

Alternatively, if the rule collision occurs, the rule converter 204 may notify the user of the collision situation. In this case, after the rule converter 204 notifies the user of the collision, the user may select whether the rule is set manually again or may select whether the priority of the rule is determined automatically by the rule converter 204 or whether the rule will be discarded.

If the use input rule is added to the rule list and stored in the rule list storage device 205 in operation S707, the rule converter 204 transmits the rule list to the SOC according to a user command or a predetermined event in operation S709. In the exemplary embodiment of FIG. 2, the rule converter 204 may transmit the rule list to the firewall manager 227 of the SOC.

The firewall manager 227 stores the rule list in the rule DB 224 in operation S711 and filters the packet according to the rule afterward. The rule list received by the firewall manager 227 is data having a linked list format and thus the firewall manager 227 may converts the rule list into a rule database format and stores the rule list in the rule DB 224.

FIG. 9 is a flowchart illustrating a packet filtering method of the device of FIG. 2 according to an exemplary embodiment, and shows an example of how a user input rule is applied when filtering packets.

FIG. 9 illustrates a packet filtering process if the device 200 transmits a packet to the outside, and assumes that a user input rule is stored in the rule DB 224 of the SOC after having been converted by the rule converter 204 and stored in the rule list storage device 205 as explained in FIG. 7.

Referring to FIG. 9, a packet is generated by a certain network application 203 and is received by the miniport driver 217 prior to being transmitted to the outside of the device 200 in operation S901.

The miniport driver 217 identifies an owner process of this packet in operation S903. In an exemplary embodiment, the owner process may be identified by a process ID included in the packet.

Information identifying the owner process of the packet is generated and is transmitted to the SOC along with the packet in operation S905. The identification information may be a process ID.

The packet and the identification information (for example, the process ID) are transmitted to the firewall engine 229 of the SOC, and the firewall engine 229 determines whether the owner process is allowed to transmit the packet to the outside in operation S907. In determining, a rule DB for each process may be used. That is, a rule that defines a packet as being allowed or blocked according to a process may be included in the rule DB 224, and, it is determined whether the owner process is allowed to transmit/receive the packet or not according to the allow and/or block rule that is set according to a process and stored in the rule DB 224.

If it is determined that the owner process is allowed to transmit the packet in operation S907, the method performs operation S909 and the firewall engine 229 performs packet filtering in operation S909. That is, a filtering job, such as determining whether to allow or block the packet according to the packet filtering rule stored in the rule DB 224, may be performed, and the packet is allowed or blocked according to a result of the determining.

Alternatively, the packet filtering operation (operation S909) may be performed before the determining operation (operation S907). That is, the determining operation (S907) may be performed with respect to only the packet that is passed through the packet filtering operation.

If the owner process is not allowed to transmit the packet in operation S907, the method performs operation S911 and the firewall engine 229 does not transmit the packet to the NIC driver 228 in operation S911. In an exemplary embodiment, the firewall engine 229 may discard the packet. In additional operation S913, the firewall engine 229 may transmit a signal to stop executing the owner process to an upper layer.

The packet filtering method described with reference to FIG. 9 is merely one of the methods of filtering packets by applying the rule DB 224, and other packet filtering methods using the rule DB 224 may be performed.

According to an alternative exemplary embodiment, the NIC 231, which is provided in order for the device 200 to communicate with an external device, may be disposed in the device 200 rather than the SOC, and accordingly, may be disposed on the NDIS 218 of the kernel layer.

According to this exemplary embodiment, all of the packets transmitted to the outside of the device 200 and the packet received from the outside may be transmitted to the miniport driver 217. The miniport driver 217 identifies the IDs of the owner processes of all of the packets transmitted or received, and transmits the process IDs to the SOC along with the packets. After that, the firewall engine 229 may apply the rule DB including the rule for each process to all of the packets.

The embodiments described above may be realized by a computer readable code on a computer readable storing medium. The computer readable storing medium includes all kinds of recording apparatuses that store data readable by a computer system. Examples of the computer readable storing medium are a read only memory (ROM), a random access memory (RAM), a CD-ROM, a magnetic tape, a floppy-disk, and an optical data storage device, and also may include a storage device realized in a format of a carrier wave (for example, transmission through the internet). The computer readable storing medium is distributed over a computer system connected through a network and may store and execute a code readable by a computer in a distributed manner.

According to one or more aspects of the exemplary embodiments, the rule input by the user through the user interface is converted by the rule converter and is stored in the format of the rule list.

According to one or more aspects of the exemplary embodiments, the firewall is set to allow or block packets according to the process of the network application, thereby allowing or blocking all of the packets generated by the process.

According to one or more aspects of the exemplary embodiments, the firewall setting job with respect to a service desired by the user can be easily performed by providing the configuration helper when setting the rule for packet filtering.

While exemplary embodiments have been particularly shown and described above, it will be understood by those of ordinary skill in the art that various changes in form and details may be made therein without departing from the spirit and scope of the present invention as defined by the following claims.

## Claims

1. A device comprising:
a chip that comprises a first storage unit that stores a rule DB for packet filtering, and a firewall engine that allows or blocks transmission of a packet by applying the rule DB; and
a rule converter that receives a rule for packet filtering from a user and converts the rule into a format to store the rule in a rule list,
wherein the chip receives a rule list converted by the rule converter and stores the rule list in the first storage unit as a rule DB.

2. The device as claimed in claim 1, further comprising a second storage unit that stores a rule list converted by the rule converter.

3. The device as claimed in claim 2, wherein, if a new rule for packet filtering received from the user and converted is added to a rule list pre-stored in the second storage unit, the rule converter checks whether the new rule collides with rules included in the pre-stored rule list.

4. The device as claimed in claim 3, wherein the rule converter checks whether the new rule collides with each of the rules included in the rule list pre-stored in the second storage unit.

5. The device as claimed in claim 1, wherein the rule list is configured in a format of a linked list.

6. The device as claimed in claim 1, wherein the chip further comprises a firewall manager,
wherein the rule converter transmits the rule list to the firewall manger and the firewall manager converts the rule list into a format of a rule DB and stores the rule list in the first storage unit.

7. The device as claimed in claim 1, further comprising a firewall user interface that provides a rule setting screen comprising an area to receive information of at least one of an IP, a protocol, and a port from the user,
wherein the rule converter converts a rule input by the user through the rule setting screen into a format of a rule list.

8. The device as claimed in claim 7, wherein the rule setting screen comprises a configuration helper,
wherein the configuration helper provides a network application list, and if at least one of applications included in the network application list is selected by the user, the configuration helper inputs at least one of an IP, a protocol, and a port necessary for executing the selected application into the area.

9. The device as claimed in claim 8, wherein the rule setting screen comprises an area trough which a rule for each process defining a packet as being allowed or blocked according to a process is input.

10. A packet filtering method of a device that mounts a chip having a firewall function thereon, the packet filtering method comprising:
receiving, by the device, a rule for packet filtering from a user and converting the rule into a format of a rule list;
receiving, by the chip, a rule list from the device and storing the rule list in a format of a rule DB; and
allowing or blocking, by the chip, transmission or reception of a packet using the rule DB.

11. The packet filtering method as claimed in claim 10, further comprising storing, by the device, the rule list in a storage unit of the device.

12. The packet filtering method as claimed in claim 11, wherein, if a new rule for packet filtering received from the user and converted is added to a rule list pre-stored in the storage unit, the device checks whether the new rule collides with rules included in the pre-stored rule list.

13. The packet filtering method as claimed in claim 12, wherein the device checks whether the new rule collides with each of the rules included in the rule list pre-stored in the storage unit.

14. The packet filtering method as claimed in claim 10, wherein the rule list is configured in a format of a linked list.

15. The packet filtering method as claimed in claim 10, further comprising providing, by the device, a rule setting screen that comprises an area to receive information of at least one of an IP, a protocol, and a port from the user,
wherein the device converts a rule input by the user through the rule setting screen into a format of a rule list.

16. The packet filtering method as claimed in claim 15, wherein the rule setting screen comprises a configuration helper,
wherein the configuration helper provides a network application list, and, if at least one of applications included in the network application list is selected by the user, the configuration helper inputs at least one of an IP, a protocol, and a port necessary for executing the selected application into the area.
